# EUROPEAN PATENT APPLICATION

(11) **EP 2 056 217 A1**
(43) Date of publication of application: **06.05.2009**
(21) Application number: 08167275.0
(22) Date of filing: 22.10.2008
(51) Int. Cl.: G06F 17/30

(54) **Geographic XML database management system**

(30) Priority: 23.10.2007 IN KO14482007
(71) Applicant: Software AG, 64297 Darmstadt (DE)
(72) Inventor: Vala, Keval B., Pune, Maharashtra (IN)
(74) Representative: Wegner, Hans

(57) **Abstract**

The present invention relates to an XML database management system for providing geographic information. In one embodiment, the XML database management system comprises a loader capable to convert (1) a geospatial data document, in particular a shape file, into an XML document in accordance with a predefined XML schema, wherein the predefined XML schema defines geospatial data (10) and attributes (20) to be stored in a single XML node, and an XQuery capability enabling a user to retrieve (4) the XML document based on one or more of its attributes (20).

## Description

### 1. Technical field

The present invention relates to an XML database management system and a database for providing geographic information.

### 2. The prior art

Geographical data have an increasing importance for a number of technical applications. For example, the planning of infrastructure networks such as streets, railways, water pipes and power grids always involve questions of geography.

More and more, information technology is used to make geographical data available in a form, which by far exceeds the capabilities of a simple map. Geographic information systems (GIS) allow linking information attributes to location data, for example people to addresses, buildings to parcels, or streets within a network. The available geographic information is provided in several layers allowing a separate processing of the data but also a complete view showing relations between the various layers.

A common data format to store geographic information is a so-called shape file which has been developed by the company ESRI in Redlands, California. A shape file stores nontopological geometry and attribute information in a common data set. The geometry defining spatial features for a feature is stored as a shape comprising a set of vector coordinates. The attribute information is typically stored as text information.

Shape files can support point, line, and area features. Area features are represented as closed loop, double-digitized polygons. Attributes are held in a dBASE® format file. Each attribute record has a one-to-one relationship with the associated shape record.

An ESRI shape file consists of a main file, an index file, and a dBASE table. The main file is a direct access, variable-record-length file in which each record describes a shape with a list of its vertices. In the index file, each record contains the offset of the corresponding main file record from the beginning of the main file. The dBASE table contains feature attributes with one record per feature. The one-to-one relationship between geometry and attributes is based on record number. Attribute records in the dBASE file must be in the same order as records in the main file. As an example, a shape file may be used to geographically reflect a certain country, wherein the shape of the country or state is reflected in the main file and the index file, whereas additional information attributes about the country are stored in one or more attributes in the dBASE table.

In order to make the information contained in a shape file accessible to a user or further processing steps it must be converted into different data formats. Some conversion tools are available to transform geographical data in XML formats like GML which describes the geometries themselves and KML which describes how to display them. However, conversion into a certain file format alone is not sufficient to facilitate the use of shape files. An efficient retrieval of a certain shape file among a plurality of other shape files is also needed.

The present invention is therefore in one aspect based on the technical problem to facilitate the retrieval and management of geometric data, in particular shape files, so that the geometric information stored in such a file is easily accessible to a user or for further processing steps.

### 3. Summary of the invention

In one aspect of the present invention, this problem is solved by an XML database management system for providing geographic information according to claim 1. In one embodiment, the XML database management system comprises a loader capable to convert a geospatial data document, in particular a shape file, into an XML document in accordance with a predefined XML schema, wherein the predefined XML schema defines nontopological geometry and attributes to be stored in a single XML node of the XML document, and an XQuery capability enabling a user to retrieve the XML document based on one or more of its attributes.

The invention is based on the recognition that an XML database system can be used to efficiently store and retrieve geographic information, if the XML documents, into which the geospatial data documents are converted, adhere to an XML schema, which defines that the geospatial information and the related attributes are stored together in a single node. As a result, an XQuery search can be performed based on values of the attributes, wherein the search provides not only the attribute but also the full geospatial document. Preferably, the XML database management system further comprises an export capability for exporting the XML documents in a scalable vector graphics (SVG) format and / or a KML format and/or as a shape file, so that any retrieved geospatial document can immediately be displayed or further processed.

In one embodiment, the XML schema for the loader is defined based on user input. Accordingly, the user can define how the geospatial documents are transformed into generic XML documents, which will in turn affect how the stored documents can be searched with an XQuery.

According to a further aspect, the present invention relates to a method of providing geographic information comprising the steps of converting a geospatial data document, in particular a shape file, into an XML document in accordance with a predefined XML schema, wherein the predefined XML schema defines geospatial data and attributes to be stored in a single XML node, and performing an XQuery based on one or more of the attributes to retrieve the XML document. The method may further comprise the step of exporting the XML document in a scalable vector graphics (SVG) format and / or a KML format, and/or as a shape file.

Finally, the present invention relates to an XML database comprising any of the above described XML database management systems and to a computer program comprising instructions adapted to perform the above described method.

### 4. Short description of the drawings

In the following, embodiments of the present invention are further described with reference to the following figures:
- Fig. 1:: A flow chart schematically illustrating an embodiment of a method according to the invention;
- Fig. 2:: A schematic representation of an XML document with geographic information and attribute information being stored in a single XML node; and
- Fig. 3:: An example of an XQuery for retrieving the XML document of Fig. 2 based on conditions imposed on the attribute.

### 5. Detailed description of preferred embodiments

In the following, exemplary embodiments of the method of the present invention are described. It will be understood that the functionality described below can be implemented in a number of alternative ways, for example in a management system for a single XML database, in a distributed arrangement of a plurality of XML databases, with an integral storage or an external storage, etc.. The database management system could be tightly integrated with the database itself or be provided separately. None of such implementation details is essential for the present invention.

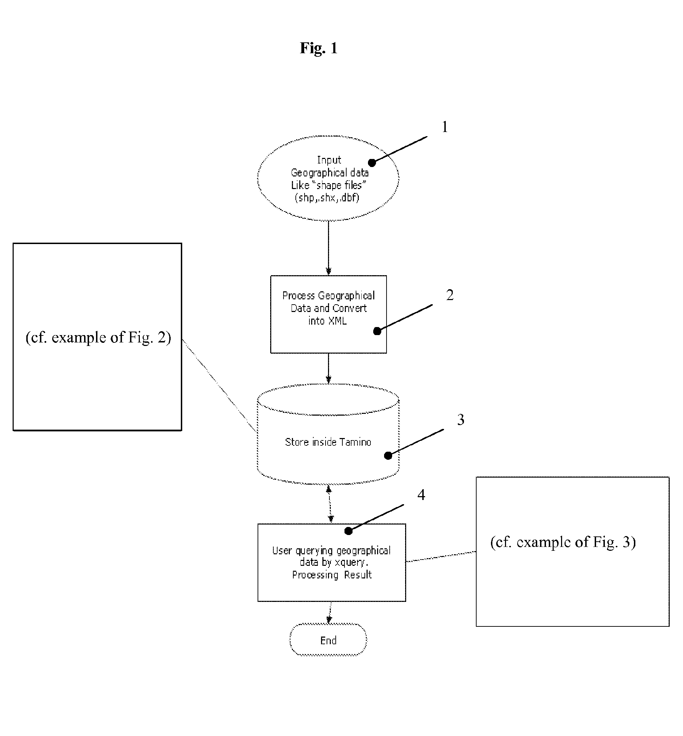

Fig. 1 presents a schematic flowchart describing exemplary steps of the process for storing geospatial data in a XML database and for retrieving the stored data using XQuery. As shown in step 1, the data may be provided as input in a variety of file formats such as shape files having the extensions .shp, .shx and .dbf. Other suitable file formats are also conceivable as input.

In step 2, the geographical data are converted by a mass loader (not shown) into XML documents in accordance with a given XML schema. Depending on the structure of a certain set of geospatial data, in particular the various attributes contained in the .dbf-file of a shape file, an adapted XML schema may be used. Further, the predefined XML schema will also influence, how a specific set geospatial data can be later retrieved from the XML database.

After conversion, the resulting XML documents are stored in step 3 in an XML database in a manner as any other XML document. The database available from applicant under the name "Tamino" is one example of an XML database suitable to perform step 3.

The predefined XML schema is in a presently preferred embodiment a Tamino-specific XML schema. Thereby, it will inherit the following advantages of XML schemas in Tamino:
- Tamino defines document types ("doctypes") belonging to a given collection with their respective names and specifies whether they allow the storing of XML or non-XML documents.
- While storing this document within Tamino, a schema ensures that every instance stored in a doctype defined in that schema is valid with respect to that schema.
- Tamino associates e.g. indexing or collation options with elements and attributes defined in the schema. These options are important for performance and sorting issues.
- Tamino associates mapping information with elements and attributes. This feature allows to specify whether they are stored natively in Tamino or (via X-Tension) in an external data store, e.g. Adabas or an SQL database. At query time, these elements and attributes are retrieved from the external database.
- Tamino allows to specify trigger functions that are invoked when a document is inserted into or deleted from the Tamino data store.

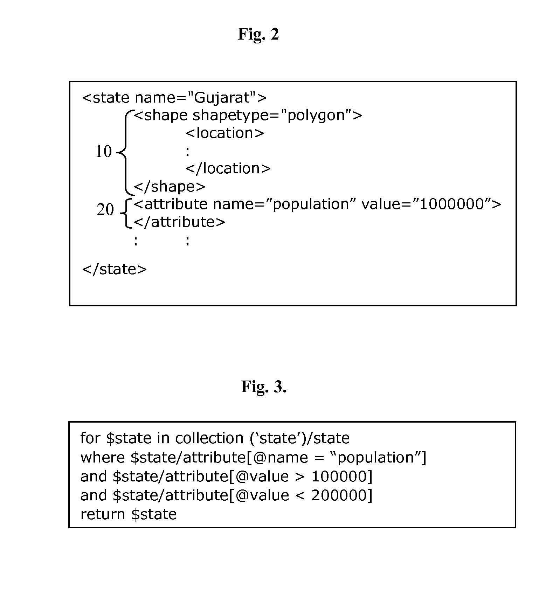

Fig. 2 presents a simplified example of an XML document containing geospatial information, as provided by the conversion step 2 of Fig. 1. As can be seen, the nontopological information 10 defining the shape of a polygon is stored in a single node together with attribute information 20 on the geospatial object defined in the XML document. In the example of Fig. 2, the node defines a state of India and the attribute information indicates the number of population of the state. Whereas the example of Fig. 2 presents only a single attribute 20, there could be many more and also a hierarchy of tree-like structured attributes contained in a single node.

An important advantage of the transformation into generic XML documents and the subsequent storage in an XML database is the easy retrieval of the stored geospatial data. As will be explained below with reference to the example of Fig. 3, the geospatial data can be easily retrieved by defining a query using XQuery on the attributes.

In the XQuery example of Fig. 3, several conditions are defined on the node <state>, namely that it comprises an attribute "population" and that the value of this attribute is within the indicated limits of 1000000 and 2000000. It is apparent that this is only a simple example and that by far more complex queries on one or more attributes of a node could be defined using XQuery in a manner, as it is well-known to the person skilled in the art.

In step 4 of the flow chart of Fig. 1, the defined query is executed. As a result, the XML database will provide one or more XML documents meeting the conditions defined in the query. The results can either be simply output to a user, for example by listing the names of the retrieved nodes. Alternatively or additionally, they could be immediately further processed, for example by transforming the retrieved XML document into one or more specific output formats, which are suitable for further processing, such as rendering the geospatial object defined in the XML document for subsequent display or printout.

One example of a format suitable for display is the KML format. KML is a file format used to display geographic data in an earth browser, such as Google Earth, Google Maps, and Google Maps for mobile. KML has a tag-based structure with names and attributes used for specific display purposes. Thus, Google Earth and Maps act as browsers for KML files. An output of the query results in the KLM format allows for example to specify image overlays on a screen. Taking the exemplary XQuery of Fig. 3, a possible response of the XML database would be to present based on the geospatial information stored in the retrieved XML document the shape of the Indian state of Gujarat on a screen or any other presentation device.

Another format suitable for export and further processing of the XQuery result is the scalable vector graphics (SVG) format developed by Adobe. SVG enables Web developers and designers to create dynamically generated, high-quality graphics from real-time data with precise structural and visual control. The resulting SVG file could be used to display maps for countries or certain geographical areas (e.g. oil-drilling claims) that are "related" to the content of the XQueries.

Finally, the XML database is preferably also capable to export the result of the query as a shape file, i.e. in the same format, which was used for input of the geospatial information in step 1 of the flowchart of Fig. 1.

## Claims

1. An XML database management system for providing geographic information comprising:
a. a loader capable to convert (1) a geospatial data document, in particular a shape file, into an XML document in accordance with a predefined XML schema, wherein the predefined XML schema defines geospatial data (10) and attributes (20) to be stored in a single XML node of the XML document; and
b. an XQuery capability enabling a user to retrieve (4) the XML document based on one or more of its attributes.

2. The XML database management system according to claim 1 further comprising an export capability for exporting the XML document in a scalable vector graphics (SVG) format and / or a KML format.

3. The XML database management system according to claim 1 or 2 further comprising an export capability for exporting the XML document as a shape file.

4. The XML database management system according to any of the preceding claims, wherein the shape file comprises a .shp, .shx and .dbf file.

5. The XML database management system of any of the preceding claims, wherein the XML schema for the loader is defined based on user input.

6. An XML database system comprising an XML database and a XML database management system according to any of the claims 1 - 5.

7. A method of providing geographic information comprising the steps of:
a. converting (1) a geospatial data document, in particular a shape file, into an XML document in accordance with a predefined XML schema, wherein the predefined XML schema defines geospatial data (10) and attributes (20) to be stored in a single XML node of the XML document; and
b. performing (4) an XQuery based on one or more of the attributes (20) to retrieve the XML document.

8. The method of claim 7, further comprising the step of exporting the XML document in a scalable vector graphics (SVG) format and / or a KML format, and / or as a shape file.

9. The method of claim 8, wherein the shape file comprises a .shp, .shx and .dbf file.

10. A computer program comprising instructions adapted to perform a method of any of the claims 7 - 9
